# EUROPEAN PATENT SPECIFICATION

(11) **EP 0 829 839 B1**
(45) Date of publication and mention of the grant of the patent: **13.10.2004**
(21) Application number: 97113334.3
(22) Date of filing: 01.08.1997
(51) Int. Cl.: G08G 1/0969

(54) **Land vehicle navigation system with multi-screen mode selectivity**
Navigationssystem für Landfahrzeug mit Auswahl des Anzeigemodus
Système de navigation pour véhicule terrestre avec mode de sélectivité à écrans multiples

(30) Priority: 02.08.1996 JP 20438096
(43) Date of publication of application: 18.03.1998
(73) Proprietor: AISIN AW CO., LTD., Anjo-shi Aichi 444-1192 (JP)
(72) Inventor: Katou, Kiyohide, Anjo-shi, Aichi-ken 444-11 (JP)
(74) Representative: VOSSIUS & PARTNER

(56) References cited:
- EP-A- 0 579 451
- EP-A- 0 583 730
- EP-A- 0 660 290
- PATENT ABSTRACTS OF JAPAN vol. 096, no. 002, 29 February 1996 & JP 07 270172 A (SUMITOMO ELECTRIC IND LTD), 20 October 1995,
- PATENT ABSTRACTS OF JAPAN vol. 096, no. 008, 30 August 1996 & JP 08 095708 A (AISIN AW CO LTD), 12 April 1996,

## Description

The present invention relates generally to electronic navigation systems, and more particularly to a method and apparatus for providing navigation route guidance information, in audible and/or visible form, to the operator of a land vehicle along a desired route between a start location and a desired destination location via road path segments as specified according to the operator's preferences.

As navigation apparatus for providing the operator or user of a land vehicle with adequate guidance information along the route for travel of the vehicle, a variety of different approaches have been developed until today. One prior known apparatus is designed to perform a route search up to a target place or destination, attaining visible and/or audible guidance of a route to the destination by use of characteristic information of maps and such route. Another prior art apparatus is configured to display a mere map covering certain range with the vehicle's present position being as its center point for presentation of information as to certain regions near or around the present position. By way of example, conventional navigation systems with route search and route guidance functions may include a system for performing concise and easy-to-catch guidance by displaying a limited amount of information such as the distance to a next-to-turn road intersection during travel along a presently recommended guidance route with the direction being adhered thereto. Another system is disclosed, for example, in JP-A-4-335390. This system is capable of simultaneously providing the positional relation of the destination versus a land vehicle as well as detailed situations near a present vehicle position by making use of two screens for permitting visual indication of a wide-area map covering both the present location and the destination along with a precise or detail map around the present position. A further navigation system is known capable of providing easy-to-catch information concerning the direction of travel by displaying travel images using three-dimensional (3D) visual effects.

Unfortunately, the prior art system as designed to limit necessary guidance information to the minimum in amount as stated supra does not come without accompanying a "trade-off" penalty which follows. While it may offer certain advantages such as an increase in visibility of guidance information displayed, the prior art system suffers from a problem in that necessary information tends to become insufficient in some cases due to the limitation of information.

With the system designed to display a wide-area map and detail map using two divided screens, the vehicle operator may recognize the positional relation of the destination and a present vehicle location in addition to detailed information near or around the present location; however, the system is encountered with a problem that the displayable information decreases by half in display region of detailed information near the present vehicle location due to employment of the two-screen division scheme. Another problem faced with this prior art is that recognizability of detailed on-map information displayed decreases with a reduction in ratio of contraction scale for display (to enlarge a displayable coverage on the screen).

With the system using 3D-display scheme for display of travel images, there is a drawback that any sufficient amount of information will not be obtainable as compared with those as obtained form use of maps.

EP-A-0 579 451 discloses a navigation apparatus according to the preamble of claim 1.

It is an object of the present invention to provide a new and improved navigation system capable of avoiding the problems faced with the prior art approaches.

It is another object of the invention to provide land vehicle navigation apparatus capable of providing vehicle operators with navigation guidance information with enhanced visibility and increased accuracy.

It is a further object of the invention to provide land vehicle navigation route apparatus capable of attaining, with enhanced versatility and flexibility, a variety of kinds of adequately relevant guidance information items in conformity with variable surrounding environmental condition along with a present-location map relating thereto.

These objects are achieved with the features of the claims.

To attain the foregoing objects, the present invention provides specific land vehicle navigation apparatus including an information storage device for storing therein map data as to route search and route guidance and other guidance data, a present position detector for detecting a present position of a vehicle, and an input device for entering commands and information of route search and route guidance. The apparatus also includes a display device for displaying a guidance screen of maps and others relating to route search and route guidance either in a one-screen display mode or in a two-screen display mode that permits simultaneous indication of two divided screens. The terminology "one-screen" as used herein may refer to the full screen area of the display device whereas the term "two-screen" may refer to simultaneous activeness of multiple screens as subdivided from the native screen of the display device as will be demonstrated in a later embodiment that such multiple divided screens may be two coexisting screen regions. The apparatus further includes a display controller responsive to entry of an input command via the input device for reading guidance data from the information storage device and for controlling display of resultant read data at the display device. Very importantly, the display controller performs an alternate change or switching between the one-screen display mode and two-screen mode with the screen of the one-screen mode of the display device corresponding to one screen of the two-screen mode while letting a present position map screen with a present vehicle position as detected by the present position detector being as a center correspond to the remaining screen of the two-screen mode.

In accordance with another aspect of the instant invention, the navigation apparatus features in that when changing to the two-screen display mode during route guidance, the display controller is responsive to receipt of criteria of a present position for displaying on the one screen a schematic diagram screen representative of travel images using three-dimensional (3D) visual effects or an architectural structure shape map screen indicative of the shape of an architectural structure. The display controller displays the schematic diagram screen on the one screen under a specific condition that the vehicle is traveling on a highway or expressway. The display controller also displays the architectural structure shape map screen on the one screen under a condition that the vehicle is traveling within towns or cities. Where a characteristic object of interest is present in the forward location of a present position, the display controller operates to display on the one screen a screen containing therein information as to the characteristic object.

These and other objects, features and advantages of the invention will be apparent from the following more particular description of preferred embodiments of the invention, as illustrated in the accompanying drawings.
Fig. 1 is a block diagram showing an overall configuration of navigation apparatus in accordance with one embodiment of the present invention.
Fig. 2 is a diagram showing one exemplary configuration of guidance road data files as stored in an information storage device.
Fig. 3 is a flowchart for explanation of the system control procedure as implemented in the navigation apparatus embodying the invention.
Fig. 4 is a depiction for explanation of guidance road number data as obtained by a route search following the procedure of Fig. 3.
Figs. 5A and 5B are diagrams each illustrating one exemplary layout arrangement of an image on a display screen.
Figs. 6A and 6B are flowcharts each for explanation of an example of a processing for switching from a one-screen display mode to a two-screen display mode.
Fig. 7 is a flowchart for explanation of one example of a screen control processing upon activation of scrolling operations.
Fig. 8 is a diagram for explanation of how the display changes between the one-screen mode and two-screen mode.
Fig. 9A is a flowchart for explanation of one example of a screen change processing from the one-screen mode, and Fig. 9B is a flowchart of another screen change procedure.
Fig. 10A is a flowchart for explanation of an example of a screen change processing from the two-screen mode, and Fig. 10B is a flowchart of another screen change procedure.
Figs. 11A and 11B are graphic representations each showing an exemplary schematic diagram screen for displaying the direction of travel by use of a travel image in an easy-to-catch manner.
Fig. 12 is an illustration of one exemplary architectural structure-shape map screen displaying the circumstances of architectural structures involved in a city in an easy-to-catch manner.

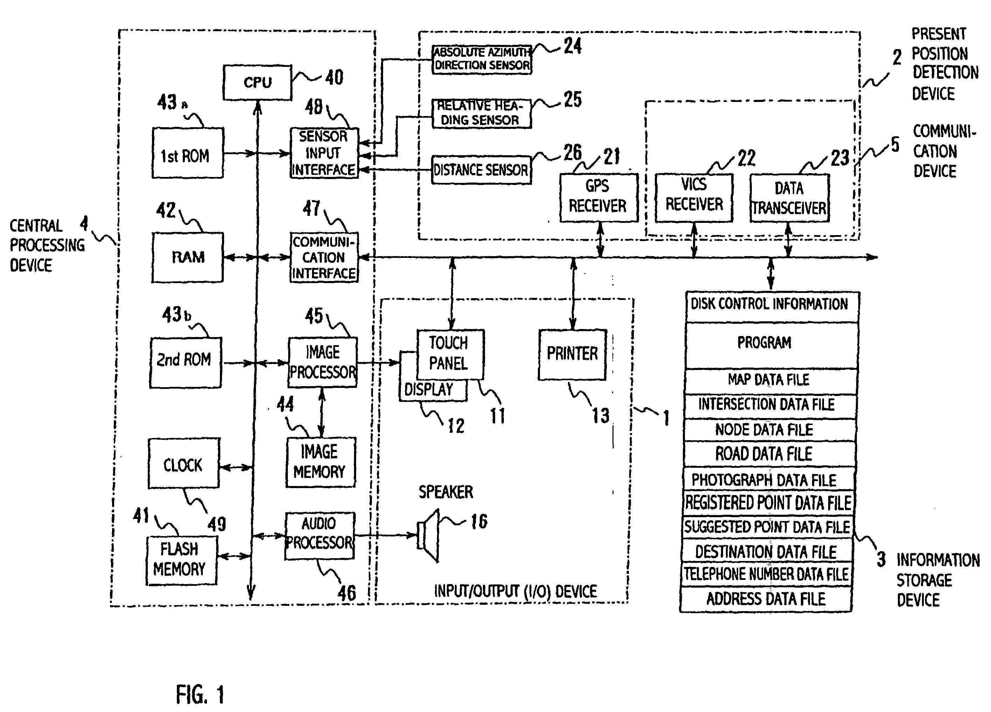

Referring to Fig. 1, a land vehicle navigation route apparatus in accordance with one preferred embodiment of the invention is shown. The navigation apparatus is generally constituted from an input/output (I/O) device 1, a present vehicle position detector device 2, information storage 3, and central processing device 4 to be referred to as the "main controller" hereinafter. The I/O device 1 permits input and output of information for selection and execution of several information items as to route search and various kinds of functions. The present position detector 2 operates to detect information as to a present position of a land vehicle. The information storage 3 stores therein navigation data necessary for calculation or computation of routes, display/speech guidance data and programs (OS and/or applications) as required for execution of route guidance, and the like. The main controller 4 is operatively coupled to the I/O 1, present-position detector 2, and storage 3. Main controller 4 controls the entire system, providing route guidance information, in audible and visible form, to a vehicle operator to implement a desired navigation route for the vehicle. In other words, controller 4 performs any necessary display/speech guidance procedure routines as required to execute route search routines and route guidance and provides controls over the entire system operations.

Respective devices constituting the navigation apparatus are as follows. The I/O device 1 operates to instruct the main controller 4 to execute tasks of navigation processing in response to the vehicle operator's intentions while permitting production of a printed output or "hard copy" of processed data, if required, to thereby enable both input of any desired destination location and output of required route guidance information upon request from the vehicle operator while allowing such information to be issued in audible and/or visible manner-that is, by means of at least one of voice guidance and visual indication thereof. To attain these functions, I/O 1 includes a data/instruction entry device, which may be a touch-sensitive panel 11 and which may also include manual operation switches for permitting input of the destination by use of telephone numbers and the coordinates on a map(s) as well as input of a request of route guidance. Obviously, the data/instruction entry device may alternatively be a detachable or remote commander unit as necessary. The I/O 1 also has an output section, which includes a visual display unit 12, a printer 13 and a speaker 16. The display unit 12 has its screen associated with the touch panel 11. Display unit 12 is for visually indicating input data and for automatically displaying on its screen route guidance in responding to a request from the vehicle operator. The printer 13 is for output of data as processed by the main controller 4 and data stored in the information storage 3. The speaker 16 is for audibly providing route guidance information and its associated data by issuing guidance voices prerecorded.

Note here that the I/O device 1 further includes speech recognition apparatus for enabling speech input and a record-card reader device for reading data prestored in an IC card or magnetic card as needed. Also, data communication apparatus can be additionally implemented therein for achievement of data communications with an associated information source(s) including a personal computer that may prestore therein user-specific data, such as map data and destination data.

The display unit 12 is arranged using either a color cathode-ray tube (CRT) monitor or color liquid crystal display (LCD) module, each of which is for visual representation of all the navigation data as color images. These may involve a route set display image based on map data and guidance data to be processed by the main controller 4, a range diagram image, a road-intersection diagram image, and the like. The display unit 12 is also designed to simultaneously display on its screen some button images as "virtual" buttons for use in setting any desired route guidance and in performing switching or changeover operations of guidance screens during route guidance as well as those buttons as used for selection/activation of various functions. Especially, the pass-through intersection information as to certain road intersection(s) through which the vehicle is expected to pass is color-displayed on a "pop-up" range diagram window which will pop up on the screen at any time when required.

The display unit 12 is embedded inside the dashboard near the driver's seat in the interior of the land vehicle, enabling a vehicle operator to confirm or verify by viewing a map displayed thereon his or her vehicle's present location and to acquire necessary information concerning a forward route along which the vehicle is to travel in future. The touch panel 11 is arranged in position so as to correspond to the virtual function buttons displayed, thereby permitting execution of the above functions in responding to a signal as input through the vehicle operator's manual touch on any desired one of these buttons. The configuration of such input signal generation device as structured from the buttons and touch panel 11 is known among those skilled in the art to which the invention pertains, and a detailed explanation thereof will here be omitted from the description.

The present-position detector 2 is the device for either detecting or receiving information as to a present position of the vehicle. To this end, the present-position detector 2 comes with an absolute azimuth direction sensor 24 including a terrestrial magnetism sensor(s), a relative azimuth sensor 25 including a vehicle steering sensor, gyro and the like, a distance sensor 26 for detection of the elapsed distance of travel based on the rotation number of wheels, and a global positioning system (GPS) radio receiver device 21 and associative communication device 5 which utilize the GPS. The communication device 5 is comprised of a vehicle information and communication system (VICS) receiver 22 as a traffic information acquisition device, and data transmitter/receiver device 23. The VICS is the system which functions to transfer road traffic information to land vehicles in a real-time manner by means of FM multiplex (character broadcast), radio-wave beacon, and/or optical beacon: The FM multiplex is to transfer rough or coarse information in an area of extended coverage whereas the information of the radio-wave beacon and optical beacon is precise or detailed information with respect to a narrow range of area whose radius is within approximately 10 kM with each beacon being as the center while enabling any vehicle to receive it when passing through such beacon. The VICS transmission data may consist, with respect to a link number associated with every road, of a traffic delay/congestion index (indicative of, for example, the degree of roads crowd with vehicles, such as closed way, traffic jam, congestion, excess amount of traffic, ordinary, and the like), a traffic-jam top position, traffic jam length, traffic control (such as road-maintenance information, blocked path, and the like), and traveling time (time as will be taken at certain speed). The data transmitter/receiver device 23 may be either a portable or handheld telephone set or a personal computer, which is responsive to receipt of a request from a vehicle operator for operating to communicate necessary navigation information with the remote traffic information center (for example, ATIS).

The information storage 3 is an external data storage unit which makes use of external recording media including, but not limited to, a compact disc read only memory (CD-ROM) drive, an optical CD-ROM drive, an IC card reader or the like. Large-capacity data recording media, such as CDs, IC cards, or any equivalents thereof, are associated with such storage device for storing navigation program and data. The program is constituted from an operating system (OS) section and an application software section. The latter may essentially consist of a map drawing section, route search section, route guidance section, present-position calculating section, destination setting operation control section, and the like. There are prestored here a program for execution of route search procedures or the like, a program for performing a display output control as necessary for display guidance of a route(s) and audible output control required for speech guidance of the same, and any data required therefor, and further, display information data necessary for route guidance and displaying of maps. Moreover, the data contains therein all the data necessary for navigation, such as map data, road intersection data, road/street data, several kinds of guidance data items, and the like.

More practically, what are stored therein are a route-search software program for setting a destination and a pass-through point based on both position information from the present-position detector 2 and an input signal from the touch panel 11 and for effecting route search using the search road data, a program for executing conversion of the search road data based on traffic information as acquired by the communication device 5 and for again executing or "reexecuting" a route search, a route information conversion software program for drawing a searched route with 3D visual effects applied thereto, a program for determination of the timing of issuance of a speech output along the route and the content of a speech phrase, and the like. Respective functions of the navigation according to the present invention may be performed by activating these programs as stored in the information storage 3. In other words, in this embodiment, any necessary programs for attaining the functions of the present invention are stored in the information storage 3 which is the external storage medium.

The main controller 4 is provided with a central processing unit (CPU) 40 for execution of a variety of kinds of operational or arithmetic processings. Controller 4 also includes an electrically erasable and programmable read only memory such as a "flash" memory 41 for storing therein one or more programs read from the CD of the information storage 3. Flash memory 41 is a rewritable semiconductor memory device of the type capable of erasing for reprogramming its presently stored program(s) upon alteration or modification of the programs in the CD. Controller 4 further includes a first ROM 43a that stores therein a memory content management program for verifying and updating the programs stored in the flash memory 41, a random access memory (RAM) 42 for temporal storage of any route guidance information searched, such as the geographical coordinates of a specified destination, road code number and the like as well as data under arithmetic processing, and a second ROM 43b for storage of display information data as necessary for route guidance and map display. Note that the program for execution of updating procedure stated supra may alternatively be stored in the external storage device when appropriate.

Moreover, the main controller 4 includes an image memory for storage of image data for use in screen display onto the display. A digital image processor 45 is provided which fetches image data from the image memory 44 on the basis of a display control signal from the CPU 40 and which applies thereto an image processing so as to output to the display unit 12. A digital voice data processor 46 is responsive to receipt of a speech output control signal from the CPU 40 for combining-by superimpose techniques-speech, audible phrase, self-explanatory sentence or voice message and the like as read out of the RAM 42 and for converting it into a corresponding analog signal for output to the speaker 16. A communication interface 47 is for transmission and receipt of input/output data by means of communications. A sensor input interface 48 is connected for fetching a sensor signal of the present-position detection device 2. A clock 49 is for writing a date and time into internal dialog information.

In the main controller 4, when data acquired by the individual sensor of the present-position detector 2 is input via the sensor input interface 48, the CPU 40 attempts to calculate based on the data the coordinates of a present position every time when a predefined length of time has elapsed, and then temporality writes or programs it into the RAM 42. The coordinates of this present position is a result of execution of map-matching processing in view of any possible detection errors of respective kinds of data items. An output value of each sensor is always subject to correction. Here, it is arranged such that the route guidance is performed with a screen display and audible speech output while the presence or absence of speech output remains selectable according to preference of the vehicle operator.

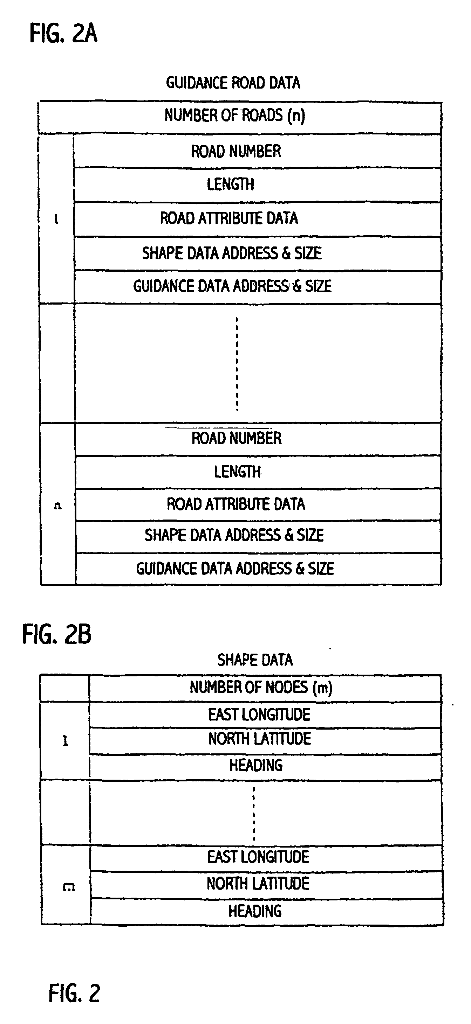

The guidance (search) road data file as stored in the information storage 3 is the data which will be necessary for the route search section to calculate a route and to perform. route guidance, part of which data file is shown in Fig. 2. As shown in Fig. 2A, the guidance (search) road data file consists of a road number, length, road attribute data, and adress and size of shape data as well as address and size of guidance data, with respect to a respective one of road number n. The road number is an identification number which has been set independently of a coming path and return path with respect to each road segment between adjacent ones of branch points or "way points" such as road intersections or the like along all the roads as contained in a map. The road attribute data is specific data indicative of the kinds of roads or streets involved, for identifying a road of interest belongs in category to which one of an elevated way, subway road, highway, national road, ordinary road, turnpike road, and others. The shape data is the one indicative of the shape or pattern of a road. As shown in Fig. 2B, where the individual road is subdivided into portions at a plurality of nodes, the shape data may have the coordinates consisting of a combination of the east longitudinal and north latitude variables on the Earth with respect to each node number m. The guidance data may consist of road intersection (or branch point) name, presence or absence of traffic signal blinker, landmark (traffic signs, advertising sign-boards of gas stations, convenience stores or the like), caution data (railroad crossings, tunnels, and the like), road-name data, and destination data.

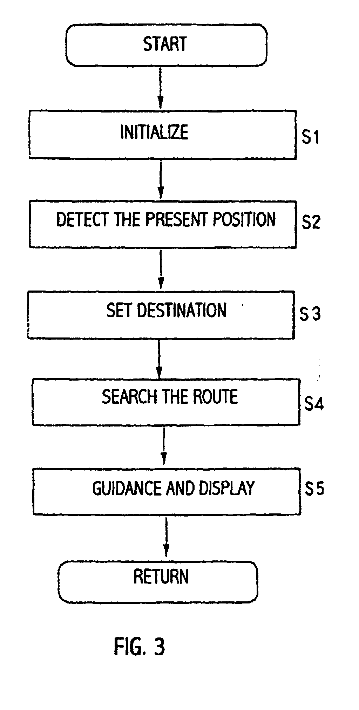

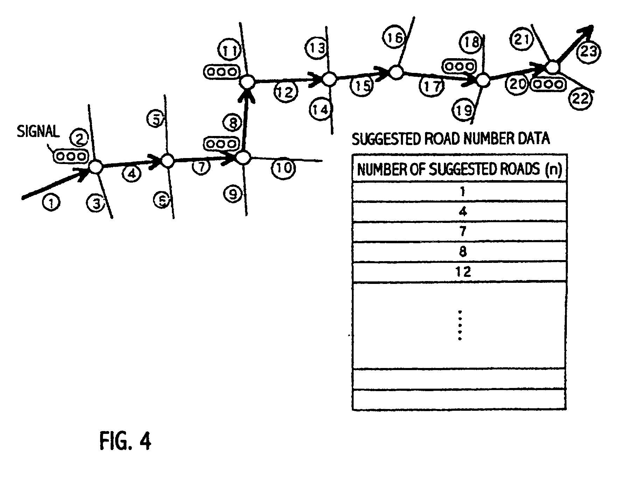

As shown in Fig. 3, the flow of the overall system processing of the navigation apparatus is such that an initialization processing is first performed causing the CPU 40 to read a navigation program out of the CD-ROM, which program is then stored in the flash memory 41 (step S1). Then, in deference to this navigation program, the present-position detector 2 performs a processing for detection of a present position allowing its nearby-region map to be displayed with the detected present position being as the center thereof while allowing the name of such present position or the like to be displayed simultaneously (step S2). Next, a processing is executed for setting of a destination using a telephone number, administrative address, facility name, registration point, or the like (step S3); thereafter, a route search processing is then carried out from the present position to the destination (step S4). More than one route along which a vehicle is expected to arrive at the destination is set as guidance road number data having a series of road numbers under guidance as shown in Fig. 4. Upon determination of a route, a processing of display output and/or speech output of route guidance until when the vehicle reaches the destination is performed while causing the present-position detector 2 to perform tracking of a present position which is changing with time (step S5).

The navigation apparatus in accordance with the present invention is arranged to employ the configuration mentioned above and to simultaneously offer the capability of changing or switching the display screen of the display unit 12 between a one-screen display mode and two-screen display mode during display output processing of route guidance.

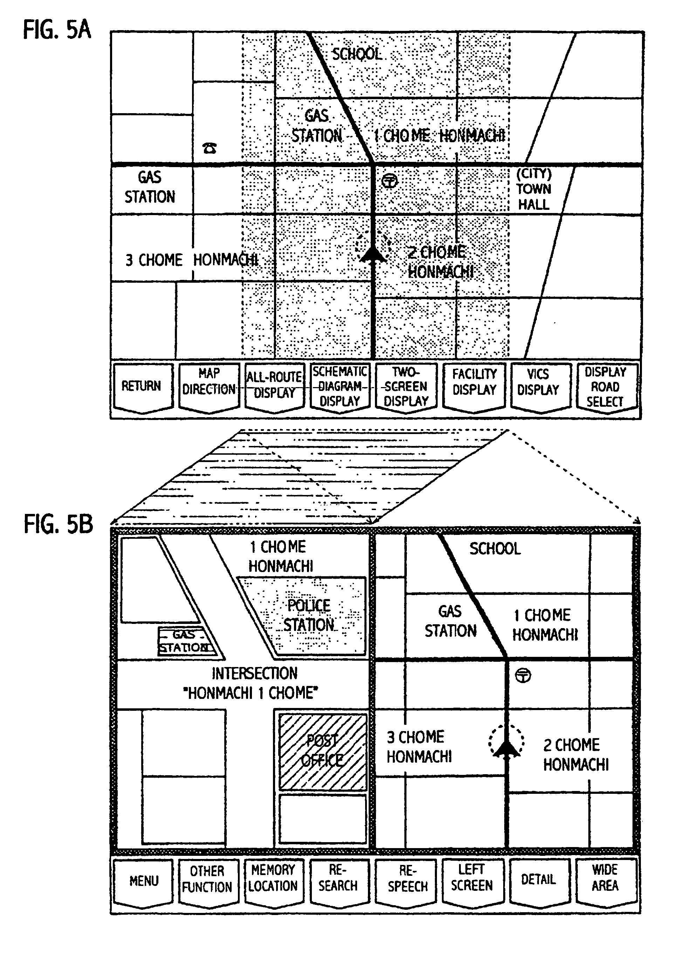

The navigation apparatus embodying the present invention is specifically arranged so that it performs a switching between the one-screen display mode shown in Fig. 5A and two-screen mode shown in Fig. 5B; in the case of the two-screen mode, a present-location map screen with a present location being as its center is displayed on one of the two screens-for example, the right-side screen-while allowing the remaining one of them-for example, the left-side screen-to be used for displaying of an architectural structure-shape map screen containing a schematic diagram screen and city map as well as other available screens relating to the other functions. In the one-screen mode shown in Fig. 5A, the present-location map screen with a present location as its center is displayed; in the two-screen mode shown in Fig. 5B, the architectural structure-shape map screen containing the city map is displayed on the left-side screen whereas the present-location map screen is displayed on the right-side screen while allowing a lateral layout of buttons for manual operations, whereby respective operation commands are input through touching of one of these buttons or depression of a corresponding one of hardware button switches as provided at the lower side of the screen so as to perform a display-mode changeover and/or screen changeover enabling a call-up of each function.

The functions of respective buttons shown in Fig. 5A are as follows. A "virtual" button "RETURN" on the display screen is to be operated either when returning to the present-location map with a present location being as the center on occasions where a map is scrolled for movement or when turning back to the original screen in a specified mode. A "MAP DIRECTION" button image is to be operated when required to change between a north-directing map that always regards the North as its upward direction and a map which constantly regards a direction of travel as the upward direction. An "ALL-ROUTE DISPLAY" button is to be operated when displaying of all the routes searched after completion of a route search. A "SCHEMATIC DIAGRAM DISPLAY" is to be operated when displaying a schematic diagram screen representative of 3D-travel images during route guidance. This button is changed in mode to a display of "SCHEMATIC DIAGRAM OFF" during display of such schematic diagram. The two-screen mode is for operation to be done when required to change to the two-screen display during the one-screen display. During the two-screen display, this button is changed to show "TWO-SCREEN DISPLAY OFF." A "FACILITY DISPLAY" button is to be operated when required to display marks of some facilities at corresponding positions on a map upon designation of any specific facilities such as, for example, gas stations, restaurants, fire stations, and the like: During display of such facilities, this button is changed to indicate an indication "FACILITY ERASE." A "VICS" button is to be turned on only during connection of VICS equipment: During displaying of VICS, it is changed to a display of "VICS ERASE." A "DISPLAY ROAD SELECT" is to be operated when required to selectively display highways in cases where the VICS display is in the turn-on state.

One exemplary display images in the two-screen display mode is shown in Fig 5B. In this two-screen mode, a map having a present location at its center is basically displayed. When the vehicle is approaching a target road intersection whereat it is expected to change its direction of travel, the right-side screen is assigned as a guidance screen for changing and displaying an enlarged or scale-magnified diagram of such intersection while making use of the left-side screen as a multi-function screen which may display a schematic diagram for presentation of its additive information, an architectural structure-shape map screen containing a city map and others or alternatively which displays any other screens for a variety of different purposes. Of those buttons being displayed on the screen shown in Fig. 5B, a "MENU" button is to be operated when calling a menu screen whereas "OTHER FUNCTIONS" is to be operated when calling each kind of function. A "MEMORY LOCATION" button is to be operated when setting of a location in the memory where location input of a destination or the like is performed and also when calling that location. A "RE-SEARCH" is to be operated for example when searching for any different route(s) other than a previously searched route or when performing a re-search upon occurrence of out-of-the-route on the way to the destination. The "RE-SPEECH" is to be operated when required to issue again the guidance voice for confirmation on occasions where once-issued guidance voice is failed to be heard during traveling, for example. A "RIGHT SCREEN" is to be operated when controlling the right-side screen; upon execution of this operation, it is possible to change a present-location map being displayed on the right-side screen to a detailed wide-area map while enabling modification of the direction of such map. Accordingly, in this mode, the "RETURN," "MAP DIRECTION," "DETAIL," and "WIDE-AREA" buttons are displayed, which buttons will be reset upon activation of the "RETURN" button. It may be appreciated by those skilled in the art that since it is also possible to display the map on the left-side screen, in cases where it is desired to call any detailed map and/or wide-area map onto the left-side screen, it may be allowed to activate the "DETAIL" and "WIDE-AREA" without having to operate the "RIGHT SCREEN."

In the way discussed supra, since the contents of operation may change in correspondence with the display mode of the screen, the buttons to be activated for execution will be suitably changed and set accordingly. Obviously, the buttons illustrated are mere examples, and the button settings will thus be freely modified in respective modes.

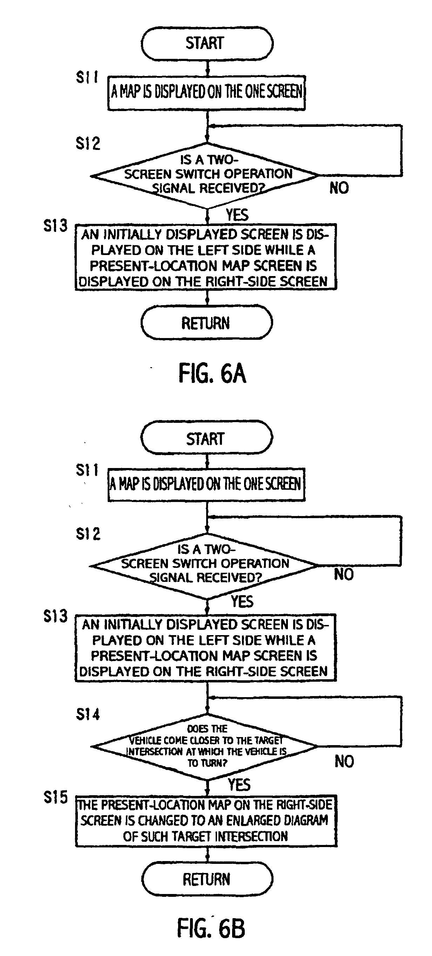

A screen changeover processing is as follows. First, the most basic processing for changing the one-screen mode to two-screen mode is as follows: For example, as shown in Fig. 6A, when a map is displayed on the one screen (step S11), determine whether or not a two-screen switch operation signal is received (step S12). Upon receipt of the two-screen switch operation signal, display an initially displayed screen on the left side while displaying on the right-side screen a present-location map screen with a present location being as the center (step S13).

Further, after a changeover is done from the one-screen display mode to the two-screen mode, wait for the vehicle's present location to approach a target intersection at which the vehicle is to turn as shown in Fig. 6B (step S14). When the vehicle comes closer to the target intersection, change the present-location map screen on the right-side screen to an enlarged diagram of such target intersection (step S15).

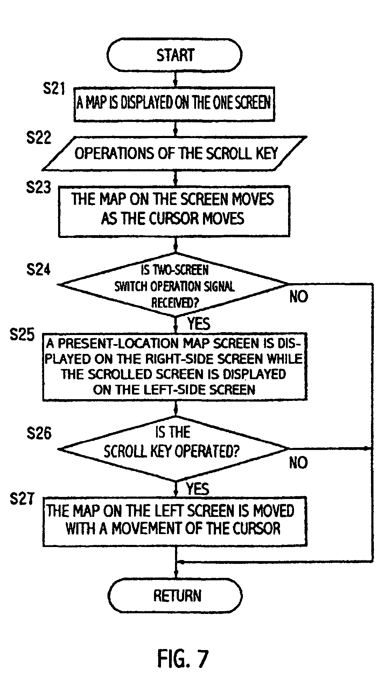

Consider that a map is scrolled calling a map containing therein a desired location onto the screen thereby changing to the two-screen mode. In this situation, when the map is displayed on the one screen as shown in Fig. 7 (step S21), in response to operations of the scroll key (step S22), move the map on the screen as the cursor moves (step S23). And, determine whether a two-screen switch operation signal is received (step S24). Upon receipt of the two-screen switch operation signal, display resultant scrolled screen on the left-side screen while simultaneously displaying a present-location map screen on the right-side screen (step S25). Check if the scroll key is further operated (step S26). If the scroll key is operated then move the map on the left screen with a movement of the cursor (step S27).

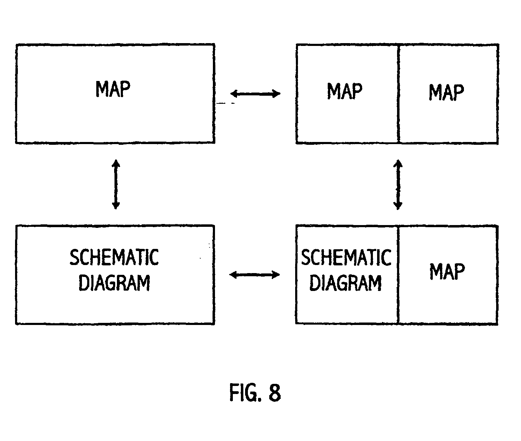

An explanation will now be given of one example which displays a map and a schematic diagram while changing between the one-screen mode and two-screen mode in conjunction with Figs. 8-10B.

Assume here that a map and a schematic diagram are prepared as display screens. Also assume that the display mode is changed between the one-screen mode and two-screen mode for usage. In this case, as shown in Fig. 8, it is possible to selectively change to either one of the map and schematic diagram for display in the one-screen mode, and also change for display to either a combination of map and map or a combination of schematic diagram and map in the two-screen mode. Here, as has been described previously, the right-side screen in the two-screen mode is for use in displaying a map of guidance screen. This screen displays a present-location map screen with a present location as the center, or displays an enlarged intersection diagram screen when the vehicle comes closer to the intersection whereat it is expected to turn. On the other hand, the left-side screen is assigned for use in displaying a various-function screen of a map display, schematic diagram display, and others: When changing between the one-screen mode and two-screen mode, let the screen of the one-screen mode correspond to the left-side screen of the two-screen mode.

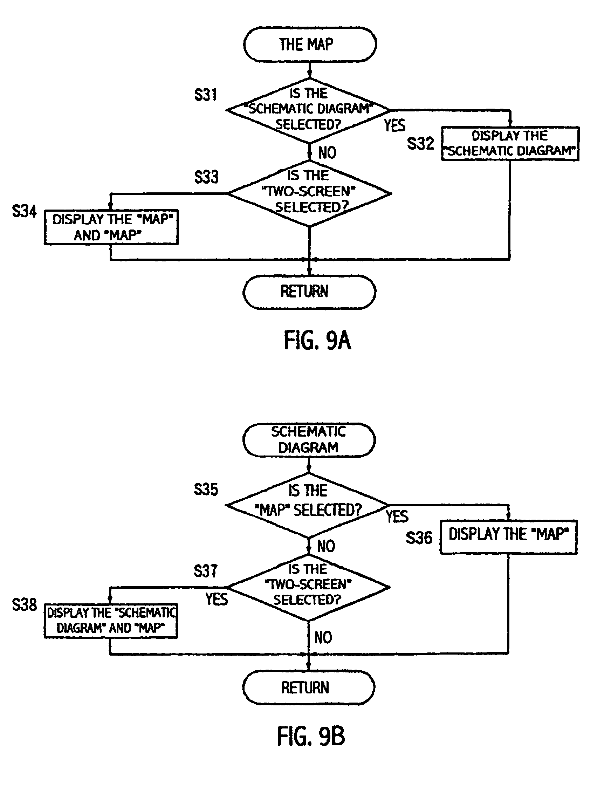

Another example of a transition processing of simple screens for changeover of these screens is as follows. Assume that a map and a schematic diagram are available as the display screen. By way of example, consider that the map is being displayed in the one-screen mode. If this is the case, as shown in Fig. 9A, check if the "SCHEMATIC DIAGRAM" button is selected (step S31). When the "SCHEMATIC DIAGRAM" button was selected, then display a schematic diagram (step S32). If the schematic diagram is not selected then further check whether the "TWO-SCREEN" button is selected (step S33). When the "TWO-SCREEN" button was selected, switch to the two-screen mode so that the map which has been displayed in the one-screen mode is displayed on the left-side screen while allowing a present-location map to be displayed on the right-side screen (step S34).

Alternatively, as shown in Fig 9B, where a schematic diagram is being displayed in the one-screen mode, check whether or not the "MAP" button is selected (step S35). When the "MAP" button was selected, display a map (step S36). Where the map is not selected, further check if the "TWO-SCREEN" button is selected (step S37). When the "TWO-SCREEN" button was selected, change to the two-screen mode so that the schematic diagram which has been displayed in the one-screen mode is now displayed on the left-side screen while allowing a present-location map to be displayed on the right-side screen (step S38).

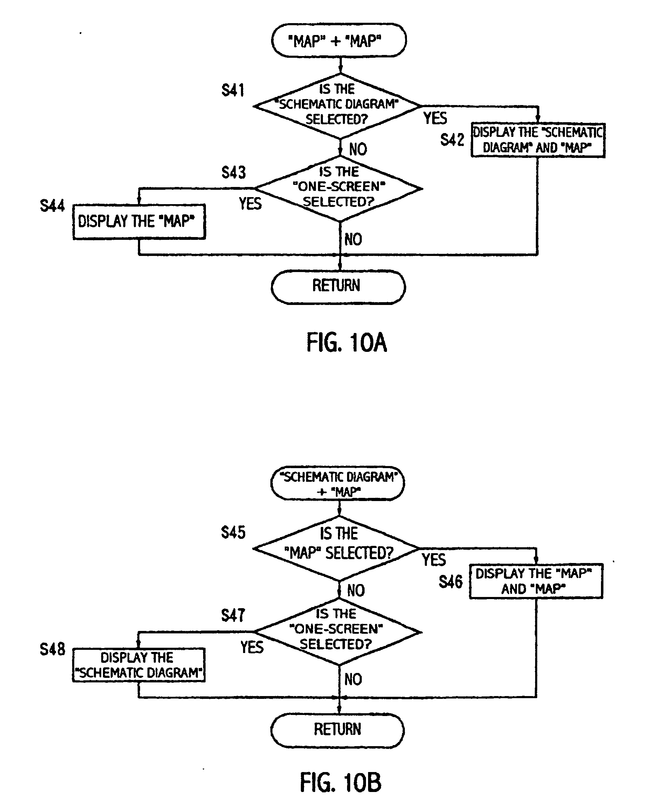

Next, as shown in Fig. 10A, in a case where maps are displayed on the both screens in the two-screen mode, check if the "SCHEMATIC DIAGRAM" button is selected (step S41). When the "SCHEMATIC DIAGRAM" button was selected, display a schematic diagram in the alternative of the map on the left-side screen (step S42). When the schematic diagram is not selected, further check if the "ONE-SCREEN" button is selected (step S43). If the "ONE-SCREEN" button was selected then change to the one-screen mode for displaying the map that has been displayed on the left-side screen (step S44).

Alternatively, as shown in Fig. 10B, in a case where a schematic diagram is displayed on the left-side screen whereas a map is displayed on the right-side screen in the two-screen mode, check if the "MAP" button is selected (step S44). If the "MAP" button was selected then display a map in the alternative of the schematic diagram on the left-side screen (step S46). When the map is not selected, further check if the "ONE-SCREEN" button is selected (step S47). If the "One-Screen" button was selected then change to the one-screen mode for displaying the schematic diagram which has been displayed on the left-side screen (step S48).

In this way, the navigation apparatus embodying the present invention operates to display in the one-screen mode any one of various function screens in response to selection operations of the buttons in a manner similar to that of the prior art systems. When changing to the two-screen mode, the previous screen continues to be displayed on the left-side screen while displaying on the right-side screen a guidance screen such as a present-location map, enlarged intersection diagram or the like. Under this condition, various function screens are displayed with respect to the left-side screen in deference to selection operations of the buttons in a manner similar to that in the case of one-screen mode. And, when the display mode is returned back to the one-screen mode from the two-screen mode, the left-side screen is directly displayed on the entire region of one screen; where it is required to display the guidance screen that has been displayed on the right-side screen, display a present-location map, enlarged intersection diagram or the like upon operation of the "RETURN" button, by way of example.

As previously mentioned, in the two-screen mode, an architectural structure-shape map screen containing therein a schematic diagram screen and city map is codisplayed along with the present-location map screen in a side-by-side manner, whereby it becomes possible to obtain useful and visibility-enhanced information such as 3D visual-effect information of travel images, information as to the shapes of architectural structures involved or the like, which is not obtainable by use of the present-location map, enlarged intersection diagram or the like. Furthermore, it is possible to provide more adequate meet-the-need additive information by selection of screens in conformity with the surrounding atmospheric conditions and travel criteria in such a manner that the schematic diagram screen is selected when the vehicle is on a highway and that the architectural structure-shape map screen is selected if it is within a city, for example.

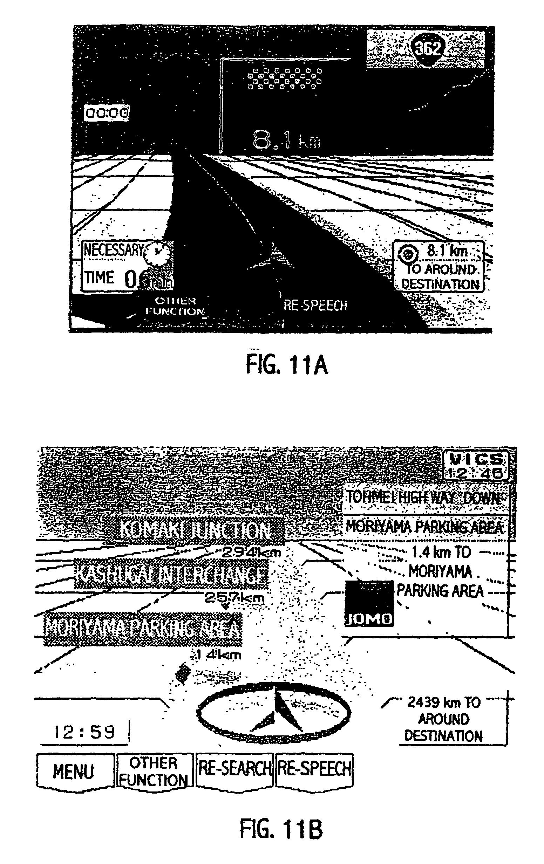

The schematic diagram screen is as follows. As a screen for use, for example, in cases where a road is line-drawn using curves, such road is displayed with 3D visual effects applied thereto by line-drawing a plurality of side lines on the right and left sides of a center line of the road as exemplarily shown in Fig. 11A. With this display scheme of such schematic diagram screen, it becomes possible to confirm the curvature of the road on the screen in a manner similar to that with a sense of vehicle's actual turn. Also, as a screen for a case where the road is drawn using straight lines, a plurality of route information items are displayed on a drawn map in addition to a 3D drawing of the road based on route information up to a certain forward position by a specified distance from a present vehicle position as shown in Fig. 11B. Additionally displayed here are several names or titles to be guided in the forward direction along the direction of travel during vehicle's running on a highway, such as interchanges, junctions, parking areas and the like, residue distance from a present vehicle position to certain title displayed, highway information concerning road facilities such as gas stations as settled at the titles displayed. As apparatus for displaying such schematic diagram screen, the land vehicle navigation apparatus as has already been proposed by the same applicant (see post-published JP-A-09-061180 and JP-A-09-292256) may be employed. Note here that in the screen shown in Fig. 11B. while highway information of "MORIYAMA PA" which is the nearest parking area from a present vehicle position, if the user designates "KASUGAI IC" or "KOMAKI JCT" which is an interchange or highway junction at a far forward location beyond the "MORIYAMA PA" then display the highway information of "KASUGAI IC" or "KOMAKI JCT." Accordingly, with such schematic diagram screen, since any complicated map is not present on the screen while 3D-displaying a present vehicle position and associated specific route information concerning forward objects in front of the present position, it is possible to ease confirmation or verification of presently displayed map information during driving enabling the operator or user to perform driving operations with enhanced safety and increased accuracy.

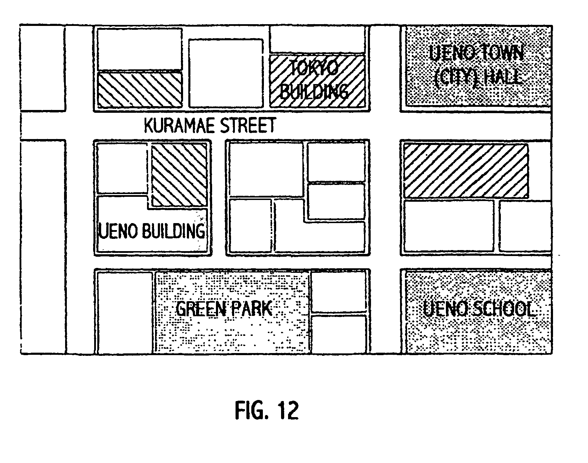

As shown in Fig. 12, the architectural structure-shape map screen is the one which displays the shapes of a various types of so-called architectural structures, including buildings (such as ordinary houses, office buildings, apartment houses, fire stations, department stores, hospitals, stations, and the like), facilities (such as towers, parks, amusement parks, sports grounds, and the like), bridges, roads and others as well as the titles or names thereof including names or titles of parks, public facilities, roads or streets. Those of the architectural structures which are depicted using some hatching patterns are the ones that are changeable in display form. In the case of color display, these may be distinctly displayed by use of colors, density, patterns and any possible combinations thereof; accordingly, they will be changeable in display form depending upon the number of data classification information and height information as well as precise titles. For example, with regard to tenant buildings, it is possible to let a target object in the region being presently displayed as a map and its characteristics become more recognizable by causing a title of a number-increased building (with an increased number of tenants) and other architecture objects-including public facilities such as schools, municipal offices, stations and the like as well as parks--to be different in display form from ordinary ones. As apparatus for displaying such maps, an information guidance apparatus using architectural structure shape maps as has been already proposed by the present applicant (see e.g. post-published JP-A-09-152 832 and JP-A-09-152 830) may be employed. The architectural structure shape map data may have a coordinate array consisting of a plurality of coordinate values for use in drawing and displaying the shape of each architectural structure, names and numbers (addresses) of these architectural structures, and several attribute information belonging to the architectural structures-by way of example, information items such as identification, height, constitution (tenants) and further telephone numbers thereof. Accordingly, when reading data of an architectural structure shape map in a coverage corresponding to the display region for drawing and displaying as an architectural structure shape map the shapes and names of respective architectural structures independently of one another on the basis of the coordinate array after determination of colors of shapes, for example, as the display form based on their identifications, heights and other precise information items (such as the scale of constitution), it is possible, upon selection of certain architectural structure on the architectural structure shape map displayed, to search for information belonging to that architectural structure and its related information for output of guidance, or on the contrary to display based on the information belonging to such selected architectural structure a shape map with this architectural structure being as the center.

The foregoing illustrative embodiment is arranged to display the center part of the screen available in the one-screen mode on the left-side screen available in the two-screen mode with the center part remaining in the same size; however, it may be modified in such a way that the entire of the screen is displayed with scale reduced, or alternatively the right-side screen and left-side screen may be changed in usage with each other. Also, although the schematic diagram screen representative of travel images with 3D visual effects and the architectural structure shape map screen indicative of the shapes of architectural structures are displayed as codisplaying screens along with a present-location map screen in the two-screen mode, this may be modified so that where a characteristic object is present in a forward location in front of a present vehicle position, other various kinds of screens are displayed containing therein information as to such object, including photographs, overview diagrams, and the like; or still alternatively, the schematic diagram screen may be Bird View, Pers, or the like, while the architectural structure shape map screen may be a city map, house map or a superimposed image thereof. Further, the type of buttons to be displayed at the lower region of the screen should not be limited to the illustrative examples only, and may be freely modified when appropriate.

As is apparent from the foregoing explanations, according to the present invention, since the one-screen mode and two-screen mode are adequately changed or switched with each other while causing the one-screen mode to correspond to one screen of the two-screen mode and allowing guidance information such as a present-location map screen and/or enlarged intersection diagram to be displayed on the remaining display screen thereof, it becomes possible using the two-screen mode to simultaneously display on a guidance screen several images involving information as to the surrounding environments in the direction of travel, easy-to-catch schematic diagram screens of travel images, an architectural structure-shape map screen such as either city maps or house maps representing the shapes of nearby architectural structures in an easy-to-see manner, an information screen of any characteristic objects, and the like, thereby enabling successful presentation of information items unable or greatly difficult to be displayed on the guidance screen and of any useful information to be added to the guidance screen.

## Claims

1. Navigation apparatus comprising:
storage means (3) for stoting therein informations for use in providing route guidance to a vehicle operator, said information including map data as to route search and route guidance as well as guidance data;
detector means (2) for detecting a present vehicle position;
input means (1) for input of commands and information of route search and route guidance;
display means (12) for visually indicating maps and guidance images relating to route search and route guidance in a specified display mode being one of a full-screen mode and a multiple-screen mode permitting simultaneous presence of a plurality of divided screens including a first screen and a second screen;
**characterized by**
display control means (45) responsive to entry of an input command through said input means (1) for reading guidance data from said storage means and for controlling display of read data at said display means (12) by performing an alternate change (S13) between the full-screen mode and the multiple-screen mode so that a screen of the full-screen mode of said display means (12) corresponds to the first screen in the multiple screen mode and a present position map containing a present vehicle position located at a center thereof detected by said detector means corresponds to the second screen in the multiple-screen mode, in case it is changed to the multiple-screen mode after scrolling a map for displaying a map which includes desired points in the full-screen mode.

2. Navigation apparatus according to claim 1, wherein a map of said first screen is scrolled (S 27) in case that a map is scrolled by the input means (1) in the two-screen mode.

3. Navigation apparatus according to claim 1 or 2, wherein a map which corresponds to the map of said first screen in the two-screen mode is displayed when the display mode is returned back to the one-screen mode from the two-screen mode.

4. Navigation apparatus according to claim 1 or 2, wherein a map around the present position is displayed when the display mode is returned back to the one-screen mode from the two-screen mode.

## Patentansprüche

1. Navigationsvorrichtung mit:
einer Speichereinrichtung (3) zum Speichern von Information zum Bereitstellen einer Routenführung für einen Fahrzeugführer, wobei die Information Kartendaten für eine Routensuche und die Routenführung sowie Führungsdaten aufweist;
einer Erfassungseinrichtung (2) zum Erfassen einer Fahrzeug-Ist-Position;
einer Eingabeeinrichtung (1) zum Eingeben von Befehlen und Information für die Routensuche und die Routenführung;
einer Displayeinrichtung (12) zum visuellen Anzeigen von Karten und Führungsbildern, die mit der Routensuche und Routenführung in Beziehung stehen, in einem spezifizierten Displaymodus, der ein Vollbildschirmmodus oder ein Mehrfachbildschirmfenstermodus sein kann, in dem mehrere getrennte Bildschirmfenster, einschließlich eines ersten und eines zweiten Bildschirmfensters, gleichzeitig dargestellt werden können;
**gekennzeichnet durch**
eine Displaysteuerungseinrichtung (45), die auf die Eingabe eines Eingabebefehls **durch** die Eingabeeinrichtung (1) anspricht, um Führungsdaten von der Speichereinrichtung zu lesen und die Darstellung gelesener Daten auf der Displayeinrichtung (12) zu steuern, indem zwischen dem Vollbildschirmmodus und dem Mehrfachbildschirmfenstermodus alternierend umgeschaltet wird (S13), so daß ein Bild der Displayeinrichtung (12) im Vollbildschirmmodus im Mehrfachbildschirmfenstermodus dem ersten Bildschirmfenster entspricht und eine Ist-Positionskarte, die die **durch** die Erfassungseinrichtung erfaßte Fahrzeug-Ist-Position in der Mitte der Karte enthält, im Mehrfachbildschirmfenstermodus dem zweiten Bildschirmfenster entspricht, wenn auf den Mehrfachbildschirmfenstermodus umgeschaltet wird, nachdem im Vollbildschirmmodus eine Karte gescrollt wurde, um eine Karte darzustellen, die gewünschte Punkte enthält.

2. Navigationsvorrichtung nach Anspruch 1, wobei eine Karte des ersten Bildschirmfensters gescrollt wird (S27), wenn eine Karte im Doppelbildschirmfenstermodus durch die Eingabeeinrichtung (1) gescrollt wird.

3. Navigationsvorrichtung nach Anspruch 1 oder 2, wobei eine Karte, die im Doppelbildschirmfenstermodus der Karte des ersten Bildschirmfensters entspricht, dargestellt wird, wenn vom Doppelbildschirmfenstermodus auf den Vollbildschirmmodus zurückgeschaltet wird.

4. Navigationsvorrichtung nach Anspruch 1 oder 2, wobei eine Karte der Umgebung der Ist-Position dargestellt wird, wenn der Displaymodus vom Doppelbildschirmfenstermodus auf den Vollbildschirmmodus zurückgeschaltet wird.

## Revendications

1. Appareil de navigation comprenant :
des moyens de stockage (3) pour stocker à l'intérieur des informations destinées à être utilisées pour offrir un guidage routier à un conducteur de véhicule, lesdites informations comprenant des données cartographiques quant à une recherche d'itinéraire et un guidage routier ainsi que des données de guidage ;
des moyens formant détecteur (2) pour détecter une position actuelle du véhicule ;
des moyens d'entrée (1) pour entrer des ordres de commande et des informations de recherche d'itinéraire et de guidage routier ;
des moyens d'affichage (12) pour présenter visuellement des cartes et des images de guidage concernant une recherche d'itinéraire et un guidage routier dans un mode d'affichage spécifié qui est l'un parmi un mode plein écran et un mode multi-écrans permettant la présence simultanée d'une pluralité d'écrans séparés comprenant un premier écran et un second écran ;
**caractérisé par**
des moyens de commande d'affichage (45) sensibles à l'entrée d'un ordre de commande d'entrée par l'intermédiaire desdits moyens d'entrée (1) pour lire des données de guidage à partir desdits moyens de stockage et pour commander l'affichage des données lues au niveau desdits moyens d'affichage (12) en exécutant un changement alterné(S13) entre le mode plein écran et le mode multi-écrans de telle sorte qu'un écran du mode plein écran desdits moyens d'affichage (12) corresponde au premier écran dans le mode multi-écrans et qu'une carte de position actuelle contenant une position actuelle du véhicule située au centre de celle-ci détectée par lesdits moyens formant détecteur corresponde au deuxième écran dans le mode multi-écrans, au cas où il serait changé pour le mode multi-écrans après le défilement d'une carte pour afficher une carte qui comprend des points souhaités dans le mode plein écran.

2. Appareil de navigation selon la revendication 1, dans lequel une carte dudit premier écran défile (S27) au cas où les moyens d'entrée (1) font défiler une carte dans le mode à deux écrans.

3. Appareil de navigation selon l'une quelconque des revendications 1 ou 2, dans lequel une carte qui correspond à la carte dudit premier écran dans le mode à deux écrans est affichée lorsque le mode d'affichage revient au mode à un écran à partir du mode à deux écrans.

4. Appareil de navigation selon l'une quelconque des revendications 1 ou 2, dans lequel une carte autour de la position actuelle est affichée lorsque le mode d'affichage revient au mode à un écran à partir du mode à deux écrans.
